# EUROPEAN PATENT APPLICATION

(11) **EP 4 517 937 A1**
(43) Date of publication of application: **05.03.2025**
(21) Application number: 24172282.6
(22) Date of filing: 24.04.2024
(51) Int. Cl.: H01M 10/653, H01M 50/103, H01M 50/474, H01M 50/531, H01M 50/184

(54) **SECONDARY BATTERY**

(30) Priority: 28.08.2023 KR 20230112498
(71) Applicant: Samsung SDI Co., Ltd., Yongin-si, Gyeonggi-do 17084 (KR)
(72) Inventor: Kim, Hyun, 17084 Yongin-si, Gyeonggi-do (KR)
(74) Representative: Gulde & Partner

(57) **Abstract**

One or more embodiments of the present disclosure relates to a secondary battery (100). The secondary battery (100) includes an electrode assembly (110), a current collector plate (120, 130) electrically connected to the electrode assembly (110), a case (160) configured to accommodate the electrode assembly (110) and the current collector plate (120, 130), a cap plate (170) coupled to the case (160), and an insulating member (180, 190, 280, 380) between the cap plate (170) and the current collector plate (120, 130), wherein the insulating member (180, 190, 280, 380) includes an insulating frame (181, 191, 281, 381), and a thermally conductive member (182, 192, 282, 382) fixed by the insulating frame (181, 191, 281, 381).

## Description

### BACKGROUND

### 1. Field

Aspects of some embodiments of the present disclosure relate to a secondary battery.

### 2. Description of the Related Art

A secondary battery is a battery, which can be charged and discharged, unlike a primary battery, which cannot be charged. A low-capacity secondary battery in which one battery cell is packaged in a pack form may be used in small, portable electronic devices, such as mobile phones and camcorders. Further, a large-capacity secondary battery module in battery pack units in which tens of battery packs are connected is widely used as a motor-driving power source in hybrid vehicles, electric vehicles, and the like.

The secondary battery can be configured by interposing a separator between a positive electrode plate and a negative electrode plate to embed a stacked or wound electrode assembly and an electrolyte in a case, and installing a cap assembly in the case. The secondary battery has a structure that electrically connects terminals installed on the electrode assembly and the cap assembly through a current collector. A high temperature is generated in a current collector having a current collection function, and this causes local heat generation, which can cause a component temperature to greatly increase, and can cause a temperature non-uniformity in the stack, which can affect the lifespan of the secondary battery. Furthermore, the electrolyte may evaporate due to a high temperature. Accordingly, a measure capable of addressing the temperature rise of the current collector is desirable.

For example, in a conventional secondary battery, an insulating structure for insulation between a current collector and a cap assembly is provided, and this insulating structure is generally formed of a non-electrically conductive plastic material. Because the insulating structure of the plastic material does not have electrical conductivity and also has low thermal conductivity, a condition in which heat cannot suitably escape to the outside is created.

The above-described information disclosed in the background of the present disclosure is only for improving understanding, and accordingly, may include information that does not constitute the related art.

### SUMMARY

The present disclosure is directed to providing a secondary battery capable of effectively dissipating the heat of a current collector to the outside.

However, technical objects to be solved by the present disclosure are not limited to the above-described aspects, and other aspects, which are not mentioned, may be clearly understood by those skilled in the art from the description of the present disclosure disclosed below.

A secondary battery according to one or more embodiments of the present disclosure includes an electrode assembly, a current collector plate electrically connected to the electrode assembly, a case configured to accommodate the electrode assembly and the current collector plate, a cap plate coupled to the case, and an insulating member between the cap plate and the current collector plate, wherein the insulating member includes an insulating frame, and a thermally conductive member fixed by the insulating frame.

The insulating frame may define a cavity passing through an upper surface and a lower surface thereof.

The insulating frame may have a ring shape in a plan view.

The thermally conductive member may fill the cavity.

A thickness of the insulating frame and a thickness of the thermally conductive member may be substantially the same.

The insulating frame may include a cover plate configured to cover one surface, and may define a cavity from one surface to another surface of the insulating frame.

The thermally conductive member may fill the cavity to cover the cover plate.

A thickness of the cover plate may be about 0.5 mm to about 3 mm.

The insulating frame may define cavities partitioned from each other.

The secondary battery may further include thermally conductive members (e.g., thermally conductive material members) respectively inserted into the cavities.

The thermally conductive member may include one or more of a silicon-based thermally conductive material, an acrylic-based thermally conductive material, or a mixture thereof.

The insulating frame may include one or more of polyamide (PA), polyethylene (PE), polypropylene (PP), or a mixture thereof.

The secondary battery may further include a terminal contacting and welded to the current collector plate, and which may be exposed through the cap plate.

The current collector plate may include an electrode connection portion welded to an electrode uncoated portion of the electrode assembly and which may extend along one side surface of the electrode assembly, and a terminal connection portion of which one end may be coupled to an upper end of the electrode connection portion, and of which another end is coupled to the terminal.

The insulating member may be between the terminal connection portion of the current collector plate and the cap plate.

The insulating member may define a through hole passing through an upper surface and a lower surface thereof, wherein the terminal may be coupled to the terminal connection portion of the current collector plate through the cap plate and the insulating member.

The terminal may include a terminal plate on the cap plate, and a terminal pillar coupled to the terminal connection portion through the cap plate and the insulating member, and which may be coupled to the terminal plate on an upper side of the cap plate.

In the insulating member, an upper surface thereof may contact a lower surface of the cap plate, and a lower surface thereof may contact an upper surface of the current collector plate.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

The above and other aspects of the present disclosure will become more apparent to those of ordinary skill in the art by describing in detail embodiments thereof with reference to the accompanying drawings, in which:
FIG. 1 is a perspective view illustrating a secondary battery according to one or more embodiments of the present disclosure;
FIG. 2 is a cross-sectional view taken along the line II-II in FIG. 1;
FIG. 3 is an exploded perspective view illustrating a state before a current collector plate, an insulating member, and an electrode assembly are coupled in the secondary battery in FIG. 1;
FIG. 4 is an exploded perspective view of the insulating member of the secondary battery according to one or more embodiments of the present disclosure;
FIG. 5 is a perspective view of an insulating member of a secondary battery according to one or more other embodiments of the present disclosure;
FIG. 6 is an exploded perspective view illustrating a state in which an insulating frame and a thermally conductive member of the insulating member in FIG. 5 are separated;
FIG. 7 is a perspective view of an insulating member of a secondary battery according to still one or more other embodiments of the present disclosure; and
FIG. 8 is an exploded perspective view illustrating a state in which an insulating frame and a thermally conductive member of the insulating member in FIG. 7 are separated.

### DETAILED DESCRIPTION

Here, embodiments of the present disclosure will be described in detail with reference to the accompanying drawings.

The embodiments of the present disclosure are provided to more completely describe the present disclosure to those skilled in the art, the following embodiments may be modified into various other forms, and the scope of the present disclosure not limited to the following embodiments. Rather, these embodiments are provided to make the present disclosure more meaningful and complete, and to fully convey the present disclosure to those skilled in the art.

Further, in the following drawings, a thickness and a size of each layer are exaggerated for convenience and clarity of description, and the same reference numerals indicate the same elements in the drawings. As used in the present specification, the term "and/or" includes any one of and all combinations of one or more of the listed items. Further, the meaning of "connected" in the present specification refers to not only a case in which member A and member B are directly connected, but also a case in which member C is interposed between member A and member B to indirectly connect member A and member B.

The terms used in the present specification are used to describe specific embodiments and are not intended to limit the present disclosure. As used in the present specification, a singular form may include a plural form unless the context clearly indicates otherwise. Further, when used in the present specification, "comprise" and/or "comprising" specify(ies) the presence of mentioned features, numbers, steps, operations, members, elements and/or groups thereof, and do(es) not exclude the presence or addition of one or more other features, numbers, steps, operations, members, elements and/or groups.

Although the terms first, second, and the like are used in the present specification to describe various members, components, regions, layers and/or parts, it is clear that these members, components, regions, layers and/or parts should not be limited by these terms. These terms are used only to distinguish one member, component, region, layer, or part from another member, component, region, layer, or part. Accordingly, a first member, component, region, layer, or part to be described later may refer to a second member, component, region, layer, or part without departing from teachings of the present disclosure.

Spatially-related terms such as "beneath," "below," "lower," "above," and "upper" are used for suitable understanding of one element or feature and another element or feature shown in the drawings. These spatially-related terms are provided for suitable understanding of the present disclosure according to various process states or usage states of the present disclosure, and are not intended to limit the present disclosure. For example, if the elements or features in the drawings are reversed, an element described as "lower" or "below" "becomes "upper" or "above." Accordingly, "below" is a concept encompassing "above" or "below."

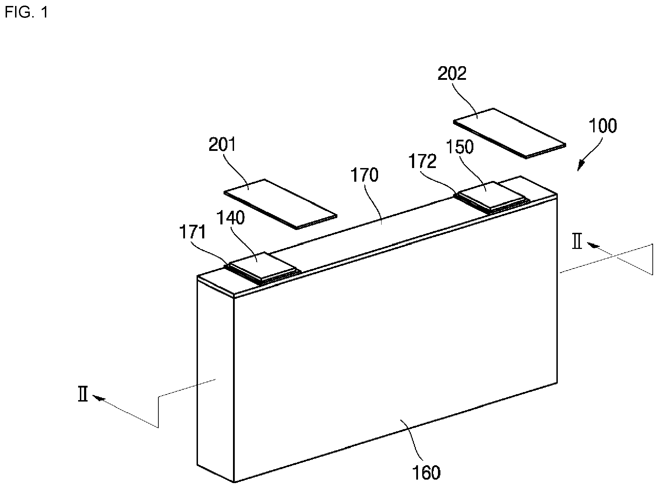

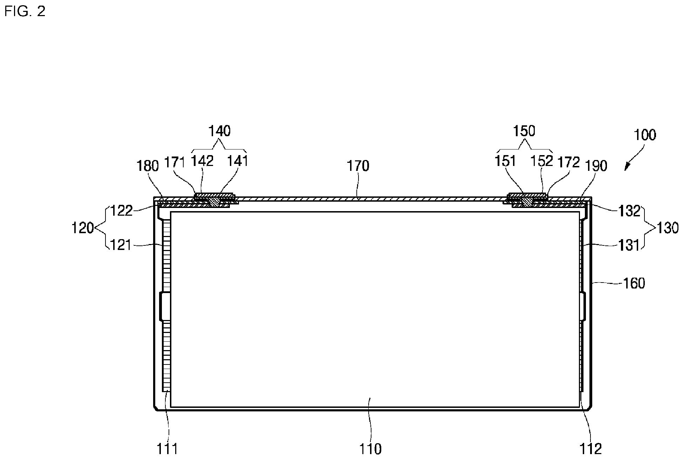

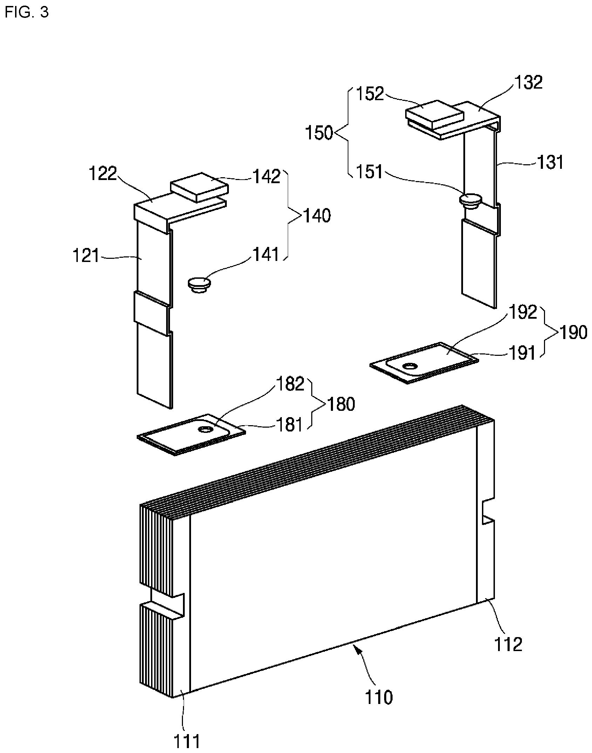

In FIG. 1, a perspective view illustrating a secondary battery according to one or more embodiments of the present disclosure is shown. In FIG. 2, a cross-sectional view taken along the line II-II in FIG. 1 is shown. In FIG. 3, an exploded perspective view illustrating a state before a current collector plate, an insulating member, and an electrode assembly are coupled in the secondary battery in FIG. 1 is shown.

Referring to FIGS. 1 to 3, a secondary battery 100 may include an electrode assembly 110, a first current collector plate 120 and a second current collector plate 130, which are current collector plates, a first terminal 140, a second terminal 150, a case 160, a cap plate 170, a first insulating member 180, and a second insulating member 190. In some embodiments, the first terminal 140 may include a first terminal pillar 141 and a first terminal plate 142, and the second terminal 150 may include a second terminal pillar 151 and a second terminal plate 152.

The secondary battery 100 according to the embodiments shown in FIGS. 1 to 3 may have a so-called prismatic structure, for example, a structure in which one cap plate 170 is coupled to the case 160 of an approximately rectangular parallelepiped shape of which one side is open, and the first terminal 140 and the second terminal 150 protrude outwardly from the cap plate 170.

The present disclosure is not limited to the secondary battery having this structure, and a secondary battery according to one or more other embodiments of the present disclosure may have a side terminal structure, for example, a structure in which two cap plates are coupled to a case of an approximately rectangular parallelepiped shape of which both sides facing each other are open, and two terminals respectively protrude outwardly from the two cap plates. Hereinafter, one or more embodiments having a prismatic structure will be described, but it may be understood that the first insulating member 180 and the second insulating member 190 may be equally applied to the side terminal structure in one or more other embodiments.

The first terminal 140 and the second terminal 150 of the secondary battery 100 may be electrically connected to busbars 201 and 202, respectively, to be connected in parallel or in series with other neighboring secondary batteries. In FIG 1, to help understanding, a state in which the busbars 201 and 202 are separated from the first terminal 140 and the second terminal 150 is shown.

The electrode assembly 110 may be formed by stacking a plurality of laminates of a first electrode plate, a separator, and a second electrode plate formed in a thin plate or film shape. In some embodiments, the first electrode plate may operate as a first polarity, for example, a positive electrode, and the second electrode plate may operate as a second polarity, for example, a negative electrode. In one or more embodiments, according to the selection of those skilled in the art, the first electrode plate and the second electrode plate may be located with different polarities.

The first electrode plate may be formed by applying a first electrode active material, such as a transition metal oxide or the like, on a first electrode current collector formed of a metal foil, such as aluminum, and may include a first electrode uncoated portion 111, which is a region where the first active material is not applied. The first electrode uncoated portion 111 may provide a path for current flow between the first electrode plate and the outside.

Further, the first electrode uncoated portions 111 may be formed to overlap at the same position if the first electrode plates are stacked, and may form a multi-tab structure. The first electrode uncoated portion 111 may be formed to protrude from one side of the electrode assembly 110. These first electrode uncoated portions 111 may be aligned at, and may protrude from, one side of the electrode assembly 110.

The second electrode plate may be formed by applying a second electrode active material, such as graphite or carbon, on a second electrode current collector formed of a metal foil, such as copper or nickel, and may include a second electrode uncoated portion 112, which is a region where the second active material is not applied. The second electrode uncoated portion 112 provides a path for current flow between the second electrode plate and the outside.

Further, the second electrode uncoated portions 112 also may be formed to overlap at the same position if the second electrode plates are stacked, and may form a multi-tab structure. The second electrode uncoated portion 112 may be formed to protrude from the other side of the electrode assembly 110.

The separator may be located between the first electrode plate and the second electrode plate to reduce or prevent the likelihood of a short circuit, and to enable movement of lithium ions. The separator may be formed of polyethylene, polypropylene, or a composite film of polyethylene and polypropylene. The material of the separator does not limit the scope of the present disclosure.

Further, in the electrode assembly 110, if a plurality of electrode plates are stacked, a stacked state may be maintained through a separate insulating tape attached to a partial region of an outer surface. In some embodiments, the insulating tape may maintain the shape of the electrode assembly 110 to allow the electrode uncoated portions 111 and 112 of the electrode assembly 110 and the current collector plates 120 and 130 to be welded at accurate positions, and to allow the electrode assembly 110 to be fixed to maintain the structure of the electrode assembly 110 in the final secondary battery structure.

Further, the electrode assembly 110 may be substantially accommodated in the case 160 together with an electrolyte. The electrolyte may be composed of an organic solvent, such as ethylene carbonate (EC), propylene carbonate (PC), diethyl carbonate (DEC), ethyl methyl carbonate (EMC), or dimethyl carbonate (DMC), and a lithium salt, such as LiPF₆ or LiBF₄. Further, the electrolyte may be liquid, solid, or a gel-phase.

The first current collector plate 120 may be formed of a conductive material, such as aluminum or the like, and may be coupled to the first electrode uncoated portion 111 protruding from one end of the electrode assembly 110 to be electrically connected to the first electrode plate. The first current collector plate 120 may be electrically connected to the first electrode uncoated portion 111 by welding. The first current collector plate 120 may include a first electrode connection portion 121 extending in a vertical direction along one side surface of the electrode assembly 110, and may include a first terminal connection portion 122 interposed between the electrode assembly 110 and the cap plate 170 and coupled to the first terminal 140.

Referring to FIGS. 2 and 3, the first electrode connection portion 121 may extend in the vertical direction along the one side surface of the electrode assembly 110, and may have an approximately plate shape. The first electrode connection portion 121 may be coupled to the first electrode uncoated portion 111 of the electrode assembly 110 through welding while being in contact with the first electrode uncoated portion 111, and may have the first polarity like the first electrode uncoated portion 111.

The first terminal connection portion 122 may be formed in an approximately '┌' shape (e.g., the shape of a capital "L" rotated clockwise 90 degrees). The first terminal connection portion 122 may include an upper portion interposed between the cap plate 170 and the electrode assembly 110 in an approximately plate shape, and may include a side portion bent and extending in a downward direction from an outer end of the upper portion. In some embodiments, the side portion may extend in the vertical direction along one side surface of the electrode assembly 110. The upper portion of the first terminal connection portion 122 may be located in parallel with the cap plate 170, and may have a terminal hole passing through between an upper surface and a lower surface. The first terminal pillar 141 may be fitted into the terminal hole and then riveted and/or welded.

The side portion of the first terminal connection portion 122 may be electrically and mechanically coupled to an upper end of the first electrode connection portion 121 by welding. The first terminal connection portion 122 may be coupled to the first electrode connection portion 121 by welding, for example, laser welding, and thus becomes one first current collector plate 120.

The second current collector plate 130 may be formed of a conductive material, such as nickel or the like, and may be in contact with the second electrode uncoated portion 112 protruding from the other side end portion of the electrode assembly 110 to be electrically connected to the second electrode plate. The second current collector plate 130 may include a second electrode connection portion 131 and a second terminal connection portion 132. Because a shape of this second current collector plate 130 is substantially the same as the shape of the first current collector plate 120, overlapping descriptions will be omitted.

The first terminal 140 may be formed of a conductive material, such as aluminum, and may be electrically connected to the first current collector plate 120. The first terminal 140 may include a first terminal pillar 141 and a first terminal plate 142. The first terminal pillar 141 may be coupled to the first terminal plate 142 on an upper side of the cap plate 170.

The first terminal pillar 141 may pass through the cap plate 170 to be electrically connected to the first current collector plate 120 at a lower portion of the cap plate 170. A lower portion of the first terminal pillar 141 may be fitted into the terminal hole of the first current collector plate 120 to be riveted and/or welded.

The second terminal 150 is formed of a conductive material, such as nickel or the like, and is electrically connected to the second current collector plate 130. The second terminal 150 may include a second terminal pillar 151 and a second terminal plate 152. Because a shape of this second terminal 150 is substantially the same as the shape of the first terminal 140, overlapping descriptions will be omitted.

The case 160 is formed of a conductive metal, such as aluminum, an aluminum alloy, or nickel-plated steel, and may be formed in an approximately hexahedral shape formed with an opening through which the electrode assembly 110, the first current collector plate 120, and the second current collector plate 130 may be inserted and seated. The cap plate 170 may be coupled to the opening of the case 160 to seal the case 160. An inner surface of the case 160 is basically insulated, and thus may reduce or prevent the likelihood of an electrical short circuit occurring inside.

A seal gasket 171 that seals between the first terminal plate 142 and the cap plate 170, and between the first terminal pillar 141 and the cap plate 170, may be provided, and likewise, a seal gasket 172 that seals between the second terminal plate 152 and the cap plate 170, and between the second terminal pillar 151 and the cap plate 170, may be provided. The seal gaskets 171 and 172 are formed of an insulating material, and may be formed to have electrically insulating and sealing functions. The seal gaskets 171 and 172 reduce or prevent external moisture from penetrating into the inside of the secondary battery 100 or the electrolyte accommodated in the secondary battery 100 from leaking to the outside.

The first insulating member 180 may be provided for electrical insulation and heat transfer between the first terminal connection portion 122 of the first current collector plate 120 and the cap plate 170. Further, the second insulating member 190 may be provided for electrical insulation and heat transfer between the second terminal connection portion 132 of the second current collector plate 130 and the cap plate 170. Referring to FIGS. 2 and 3, the first insulating member 180 may be arranged between an upper surface of the first terminal connection portion 122 of the first current collector plate 120 and a lower surface of the cap plate 170 corresponding to the upper surface of the first terminal connection portion 122. The second insulating member 190 may be arranged between an upper surface of the second terminal connection portion 132 of the second current collector plate 130 and a lower surface of the cap plate 170 corresponding to the upper surface of the second terminal connection portion 132.

The first insulating member 180 may include an insulating frame 181 and a thermally conductive member (e.g., thermally conductive material member) 182. The insulating frame 181 may be formed of a plastic material having a high electrical insulating property, such as polyamide (PA), polyethylene (PE), polypropylene (PP), or the like. The thermally conductive member 182 may be formed of a thermally conductive material (a thermal interface material (TIM)) having relatively high thermal conductivity, for example, may be formed of a thermally conductive material, such as a silicon-based material, an acrylic-based material, or the like.

Because the first insulating member 180 includes the thermally conductive member 182 having a suitable heat transfer property, heat of the first current collector plate 120, where heat is concentrated, may be suitably transferred to the cap plate 170 through the thermally conductive member 182, and for example, heat dissipation may be suitably performed.

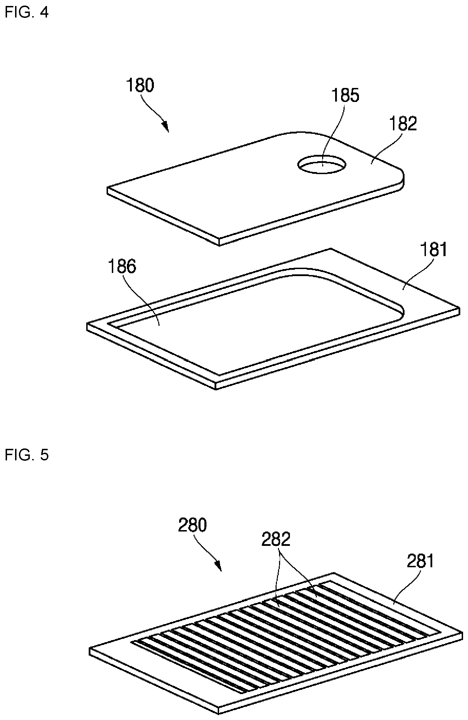

Referring to FIG. 4, the insulating frame 181 may include, or define, a cavity 186 in which the thermally conductive member 182 is accommodated. In some embodiments, the cavity 186 may be a hole that connects an upper surface and a lower surface of the insulating frame 181. Further, the cavity 186 may be located approximately at the center of the insulating frame 181 in a plan view. The thermally conductive member 182 may fill the cavity 186 of the insulating frame 181. In one or more embodiments, the insulating frame 181 may have a ring shape surrounding the thermally conductive member 182 in a plan view. In one or more embodiments, the thermally conductive member 182 may include a through hole 185 through which the above-described first terminal pillar 141 of the first terminal 140 passes. An upper surface of the thermally conductive member 182 may be in contact with the lower surface of the cap plate 170, and a lower surface of the thermally conductive member 182 may be in contact with the upper surface of the first terminal connection portion 122 of the first current collector plate 120. For example, the thermally conductive member 182 may be formed by applying a liquid-type thermally conductive material in the insulating frame 181, and by then curing the liquid-type thermally conductive material. A thickness of the insulating frame 181 may be substantially the same as a thickness of the thermally conductive member 182.

The second insulating member 190 may have a structure that is similar to the first insulating member 180, and may include an insulating frame 191 and a thermally conductive member 192.

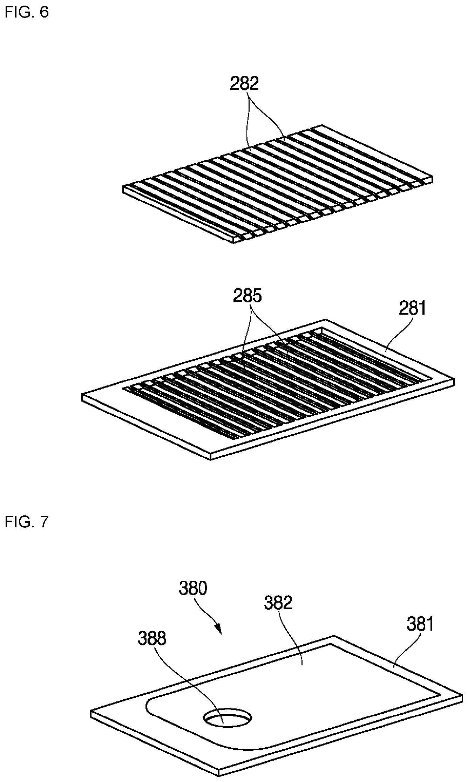

FIG. 5 is a perspective view of an insulating member of a secondary battery according to one or more other embodiments of the present disclosure, and FIG. 6 is an exploded perspective view illustrating a state in which an insulating frame and a thermally conductive member of the insulating member in FIG. 5 are separated. This insulating member 280 may replace the first insulating member 180 and the second insulating member 190 of the secondary battery shown in FIGS. 1 to 3.

Referring to FIGS. 5 and 6, the insulating member 280 includes an insulating frame 281 and a thermally conductive member 282. The insulating frame 281 may be formed with a plurality of partitioned cavities 285, and a plurality of thermally conductive members (e.g., thermally conductive material members) 282 are provided and respectively inserted into the plurality of cavities 285. In some embodiments, the plurality of cavities 285 may be in the form of a slit extending along one direction, but a plurality of cavities 285 partitioned along a row direction or column direction also may be provided. In one or more embodiments, the disposition of the plurality of cavities 285 may be variously changed. In FIGS. 5 and 6, a through hole through which the first terminal pillar 141 passes to be coupled thereto may be further provided.

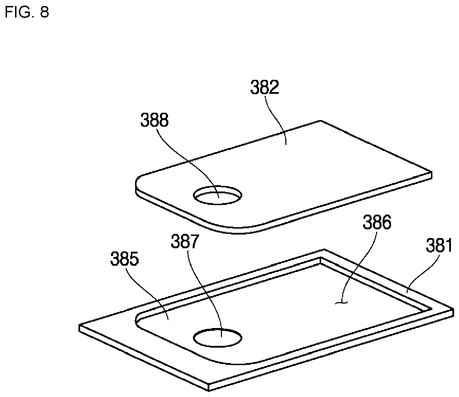

FIG. 7 is a perspective view of an insulating member of a secondary battery according to still one or more other embodiments of the present disclosure, and FIG. 8 is an exploded perspective view illustrating a state in which an insulating frame and a thermally conductive member of the insulating member in FIG. 7 are separated. This insulating member 380 may replace the first insulating member 180 and the second insulating member 190 of the secondary battery shown in FIGS. 1 to 3. Referring to FIGS. 7 and 8, the insulating member 380 may include an insulating frame 381 and a thermally conductive member 382. The insulating frame 381 may include a cavity 386 into which the thermally conductive member 382 is inserted, and may be provided with a cover plate 385 that covers one surface of the insulating frame 381. In some embodiments, the cavity 386 may have a groove shape provided in a direction from the other surface of the insulating frame 381, which is an opposite surface of one surface to the one surface.

In some embodiments, a through hole 387 through which the first terminal pillar 141 of the first terminal 140 passes may be formed in the cover plate 385. Further, the thermally conductive member 382 may have a through hole 388 through which the first terminal pillar 141 of the first terminal 140 passes. The thermally conductive member 382 may cover the cover plate 385 by filling the inside of the cavity 386. An upper surface of the insulating frame 381 may be located on the same plane as an upper surface of the thermally conductive member 382.

The cover plate 385 may have a thickness in a range of about 0.5 mm to about 3 mm. Because heat dissipation might not be suitable if the thickness of the cover plate 385 is too thick, the cover plate 385 was designed to have a thickness capable of suitably dissipating heat and securing structural strength.

A secondary battery according to one or more embodiments of the present disclosure can effectively dissipate the heat of a current collector plate by arranging an insulating member including a thermally conductive member having high thermal conductivity between a current collector plate and a cap plate.

However, aspects that can be acquired through the present disclosure are not limited to those described above, and other aspects, which are not mentioned, can be clearly understood by those skilled in the art from description of the present disclosure disclosed above.

The above description is only one or more embodiments for carrying out the present disclosure, and the present disclosure is not limited to the above, and as claimed in the following claims, the present disclosure will be considered to the extent that various modifications can be made by anyone skilled in the art without departing from the scope of the present disclosure as defined by the appended claims.

## Claims

1. A secondary battery (100) comprising:
an electrode assembly (110);
a current collector plate (120, 130) electrically connected to the electrode assembly (110);
a case (160) configured to accommodate the electrode assembly (110) and the current collector plate (120, 130);
a cap plate (170) coupled to the case (160); and
an insulating member (180, 190, 280, 380) between the cap plate (170) and the current collector plate (120, 130),
wherein the insulating member (180, 190, 280, 380) comprises an insulating frame (181, 191, 281, 381), and a thermally conductive member (182, 192, 282, 382) fixed by the insulating frame (181, 191, 281, 381).

2. The secondary battery (100) as claimed in claim 1, wherein the insulating frame (181, 191) has a ring shape in a plan view.

3. The secondary battery (100) as claimed in claim 1 or 2, wherein the insulating frame (181, 191) defines a cavity (186) passing through an upper surface and a lower surface thereof.

4. The secondary battery (100) as claimed in claim 3, wherein:
the thermally conductive member (182, 192) fills the cavity (186); and/or
a thickness of the insulating frame (181, 191) and a thickness of the thermally conductive member (182, 192) are substantially the same.

5. The secondary battery (100) as claimed in claim 1, wherein the insulating frame (381) comprises a cover plate (385) configured to cover one surface, and defines a cavity (386) from one surface to another surface of the insulating frame (381).

6. The secondary battery (100) as claimed in claim 5, wherein:
the thermally conductive member (382) fills the cavity (386) to cover the cover plate (385); and/or
a thickness of the cover plate (385) is about 0.5 mm to about 3 mm.

7. The secondary battery (100) as claimed in claim 1, wherein the insulating frame (281) defines cavities (285) partitioned from each other.

8. The secondary battery (100) as claimed in claim 7, further comprising thermally conductive members (282) respectively inserted into the cavities (285).

9. The secondary battery (100) as claimed in any one of the preceding claims, wherein:
the thermally conductive member (182, 192, 282, 382) comprises one or more of a silicon-based thermally conductive material, an acrylic-based thermally conductive material, or a mixture thereof; and/or
the insulating frame (181, 191, 281, 381) comprises one or more of polyamide, PA, polyethylene, PE, polypropylene, PP, or a mixture thereof.

10. The secondary battery (100) as claimed in any one of the preceding claims, further comprising a terminal (140, 150) contacting and welded to the current collector plate (120, 130), and exposed through the cap plate (170).

11. The secondary battery (100) as claimed in claim 10, wherein the current collector plate (120, 130) comprises:
an electrode connection portion (121, 131) welded to an electrode uncoated portion (111, 112) of the electrode assembly (110) and extending along one side surface of the electrode assembly (110); and
a terminal connection portion (122, 132) of which one end is coupled to an upper end of the electrode connection portion (121, 131), and of which another end is coupled to the terminal (140, 150).

12. The secondary battery (100) as claimed in claim 11, wherein the insulating member (180, 190, 280, 380) is between the terminal connection portion (122, 132) of the current collector plate (120, 130) and the cap plate (170).

13. The secondary battery (100) as claimed in claim 11 or 12, wherein the insulating member (180, 190, 380) defines a through hole (185, 388) passing through an upper surface and a lower surface thereof, and
wherein the terminal (140, 150) is coupled to the terminal connection portion (122, 132) of the current collector plate (120, 130) through the cap plate (170) and the insulating member (180, 190, 380).

14. The secondary battery (100) as claimed in any one of claims 11 or 13, wherein the terminal (140, 150) comprises a terminal plate (142, 152) on the cap plate (170), and a terminal pillar (141, 151) coupled to the terminal connection portion (122, 132) through the cap plate (170) and the insulating member (180, 190, 280, 380), and coupled to the terminal plate (142, 152) on an upper side of the cap plate (170).

15. The secondary battery (100) as claimed in any one of the preceding claims, wherein, in the insulating member (180, 190, 280, 380), an upper surface thereof contacts a lower surface of the cap plate (170), and a lower surface thereof contacts an upper surface of the current collector plate (120, 130).
